# EUROPÄISCHE PATENTSCHRIFT

(11) **EP 0 706 822 B1**
(45) Veröffentlichungstag und Bekanntmachung des Hinweises auf die Patenterteilung: **01.04.1998**
(21) Anmeldenummer: 95115515.9
(22) Anmeldetag: 02.10.1995
(51) Int. Cl.: B01J 13/16

(54) **Verfahren zur Mikroverkapselung unter Verwendung öllöslicher Emulgatoren**
Process for microencapsulation using oil soluble emulsifiers
Procédé de microencapsulation utilisant des émulsifiants solubles dans l'huile

(30) Priorität: 13.10.1994 DE 4436535
(43) Veröffentlichungstag der Anmeldung: 17.04.1996
(73) Patentinhaber: BAYER AG, 51368 Leverkusen (DE)
(72) Erfinder: Hagedorn, Manfred, D-53842 Troisdorf (DE); Nyssen, Peter-Roger, D-41542 Dormagen (DE); Weisser, Jürgen, Dr., D-41542 Dormagen (DE)

(56) Entgegenhaltungen:
- EP-A- 0 278 878
- US-A- 5 164 126
- PATENT ABSTRACTS OF JAPAN vol. 016, no. 128 (C-0924), 2.April 1992 & JP-A-03 293025 (NIKKO KEMIKARUZU KK;OTHERS: 01), 24.Dezember 1991,
- PATENT ABSTRACTS OF JAPAN vol. 006, no. 068 (C-100), 30.April 1982 & JP-A-57 007234 (NIPPON SAAFUAKUTANTO KOGYO KK), 14.Januar 1982,

## Beschreibung

Bei Mikroverkapselungsverfahren, die nach dem Prinzip einer Grenzflächen-Polyaddition ablaufen, ist als erster Schritt die Herstellung einer Öl-in-Wasser-Emulsion erforderlich. Hierbei enthält die diskontinuierliche Ölphase im allgemeinen die zu verkapselnden Stoffe, gegebenenfalls ein lipophiles Lösungsmittel und eine Substanz, die zur Polyaddition befähigt ist. Bei den zu verkapselnden Stoffen kann es sich um beliebige Stoffe handeln, z.B. Farbstoffe, Leukofarbstoffe, Paraffinöle, Pflanzenschutzmittel, Insektizide und Pharmazeutika. Sie sollten jedoch in ausreichendem Maße öllöslich sein und mit den Wandbildnern nicht reagieren.

Bei den ebenfalls in der Ölphase gelösten Stoffe, die zur Polyaddition befähigt sind, kann es sich z.B. um monomere oder oligomere Polyisocyanate oder Polyepoxide handeln.

Wenn man den zur Polyaddition notwendigen Reaktionspartner, im allgemeinen ist das ein wasserlösliches Amin der kontinuierlichen Wasserphase zusetzt, so entsteht an der Grenzfläche zwischen Öl und Wasser in kurzer Zeit ein hochmolekulares Polyadditionsprodukt, das die Kapselwand darstellt und den Öltropfen einschließt. Es resultiert nach beendeter Polyadditionsreaktion eine Dispersion von Mikrokapseln in Wasser.

Ein zentraler Verfahrensschritt bei dieser Mikroverkapselungsmethode ist die Erzeugung einer stabilen Öl-in-Wasser-Emulsion. Dies erreicht man durch die Verwendung von Emulgatoren, welche die Grenzflächenspannung zwischen Öl und Wasser herabsetzen und/oder durch die Verwendung von Stabilisatoren (teilweise auch als Schutzkolloid bezeichnet), welche die Koaleszenz verhindern, d.h. dem Zusammenfließen bereits gebildeter Öltröpfchen entgegenwirken. Bei der Emulgierung von Ölphasen mit niedriger Grenzflächenspannung kann gegebenenfalls auf die Zugabe von Emulgatoren verzichtet werden. So beschreibt die DE-A 3 346 601 lediglich den Zusatz von Schutzkolloiden, z.B. Polyvinylalkoholen, zur wäßrigen Phase ohne den Einsatz von Emulgatoren. Nachteilig ist hierbei, daß zur Emulgierung hohe Scherkräfte aufgebracht werden müssen.

Gemäß der DE-A 2 753 767 werden zur Emulgierung und Stabilisierung der Emulsion der wäßrigen Phase Emulgierhilfsmittel zugesetzt, z.B. Carboxymethylcellulose, Gelatine, Polyvinylalkohol (Stabilisatoren) und 3-Benzyl-hydroxybiphenyl, Umsetzungsprodukte von Nonylphenol mit unterschiedlichen Mengen Ethylenoxid und Sorbitanfettsäureester (Emulgatoren).

Die EP-A 1 40 770 beschreibt ebenfalls den Zusatz von Emulgierhilfsmitteln und Schutzkolloiden in die wäßrige Phase.

Gemäß der US-A 5 164 126 wird der Wasserphase ein wasserlösliches Polymer mit oberflächenaktiven Eigenschaften zugesetzt, das die Eigenschaften eines Emulgators und eines Stabilisators in sich vereinigt.

US-A 4 876 290 offenbart einen Grenzflächen-Polyadditionsprozeß zur Herstellung von Mikrokapseln, bei dem durch Zugabe von oberflächenaktiven Substanzen eine Grenzfiächenspannung zwischen der Öl- und Wasserphase im Bereich 0 bis 20 mN/m eingestellt wird. Die oberflächenaktiven Substanzen werden auch hier in Schutzkolloide und Tensid unterteilt. Diese werden getrennt oder im Gemisch untereinander der Wasserphase zugesetzt.

Bisher werden bei der Herstellung von Öl-in-Wasser-Emulsionen für Mikroverkapselungsverfahren stets Emulgatoren bzw. oberflächenaktive Substanzen verwendet, die der Wasserphase zugesetzt werden und bevorzugt wasserlöslich sind. Außerdem wird bei herkömmlichen Verfahren zur Herstellung von Mikrokapseldispersionen relativ viel Emulgierenergie benötigt, ist die Volumenverteilungskurve der Mikrokapseln in der Dispersion häufig unerwünscht breit und ist insbesondere bei kontinuierlichen Emulgierprozessen der Durchsatz pro Zeiteinheit noch nicht optimal hoch.

Es wurde nun ein Verfahren zur Herstellung von Mikrokapseldispersionen gefunden, bei dem nach einem Grenzflächen-Polyadditionsverfahren gearbeitet wird, bei dem man aus einer Ölphase, die den zu verkapselnden Stoff und eine lipophile, zur Polyaddition befähigte Substanz enthält, und einer wäßrigen Phase eine Öl-in-Wasser-Emulsion herstellt und danach der Wasserphase den zur Polyaddition benötigten Reaktionspartner zusetzt, das dadurch gekennzeichnet ist, daß man der Ölphase vor der Emulgierung einen öllöslichen Emulgator zufügt.

Es ist häufig vorteilhaft, zusätzlich zu den öllöslichen Emulgatoren noch Stabilisatoren (Schutzkolloide) zu verwenden. Die Stabilisatoren können dem Stand der Technik entsprechen und werden, wenn sie eingesetzt werden, der Wasserphase zugesetzt.

Als öllösliche Emulgatoren sind nichtionische Typen bevorzugt, beispielsweise Fettsäureester, Fettamide, Polyglykolether und Polypropylenglykolether. Diese sollten eine Löslichkeit von mindestens 0,01 Gew.-%, vorzugsweise von 0,01 bis 2 Gew.-% in der Ölphase aufweisen.

Geeignete Fettsäureester sind beispielsweise solche aus Fettsäuren mit 8 bis 18 C-Atomen und Ethylenglykol, Polyethylenglykol, Propylenglykol, Glycerin, Polyglycerin, Sorbit, Pentaerythrit, Glycerinestern oder Saccharose als Alkoholkomponente.

Geeignete Fettamide sind beispielsweise solche von Fettsäuren mit 8 bis 18 C-Atomen und aliphatischen Aminen, Polyaminen, Alkanolaminen, Aminoestern und Aminoethern.

Geeignete Polyglykolether und Polypropylenglykolether sind beispielsweise solche mit Alkoholen, Thiolen, Hydroxycarbonsäureestern, Zuckern, Fettaminen, Polyaminen, Fettsäurealkanolamiden, Fetthydrolysaten, Polypropylenglykol, Alkylphenolen, kondensierten Phenolen und Abietinsäure.

Besonders bevorzugte öllösliche Emulgatoren sind Fettalkoholpolyglykolether der folgenden Formel 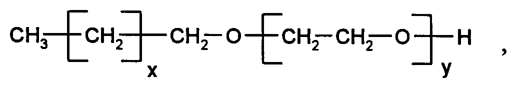 in der
- x: für eine ganze Zahl von 10 bis 16 und
- y: für eine ganze Zahl von 4 bis 12 steht.

Die öllöslichen Emulgatoren können z.B. in einer Konzentration von 0,02 bis 1 Gew.-%, bevorzugt von 0,05 bis 1 Gew.-%, bezogen auf die Ölphase, angewendet werden.

Bei den Grenzflächen-Polyadditionsverfahren handelt es sich bevorzugt um solche, bei denen aus in der Ölphase gelösten Isocyanaten und der Wasserphase zuzugebenden Aminen an der Grenzfläche Polyharnstoff als Kapselwandmaterial entsteht.

Vorzugsweise handelt es sich bei den lipophilen, zur Polyaddition befähigten Substanzen um Polyisocyanate, insbesondere um aliphatische Di- und/oder Triisocyanate, Oligomere aus aliphatischen und/oder aromatischen Di- und/oder Triisocyanaten vom Biurettyp mit freien NCO-Gruppen, Oligomere von aliphatischen und/oder aromatischen Diisocyanaten vom Isocyanurat-Typ, Reaktionsprodukte aus Oligomeren von aliphatischen und/oder aromatischen Di- und/oder Triisocyanaten und Kohlendioxid vom Oxadiazintriontyp mit freien NCO-Gruppen, Oligomere von aliphatischen und/oder aromatischen Di- und/oder Triisocyanaten vom Allophanant-Typ mit freien NCO-Gruppen, Oligomere von gemischtaliphatisch-aromatischen Diisocyanaten und aromatische Di- und/oder Triisocyanate.

Die lipophilen, zur Polyaddition befähigten Substanzen gelangen üblicherweise gelöst in einem inerten Öl zum Einsatz, wobei dieses Öl auch die zu verkapselnden Stoffe enthält. Bei den inerten Ölen handelt es sich um solche, die unter den Bedingungen für die Mikroverkapselung mit den Wandbildnern und den zu verkapselnden Stoffen keine Reaktionen eingehen. Beispielsweise kommen in Frage: Aromatische, aliphatische und naphthenische Kohlenwasserstoffe und deren Gemische, Carbonsäureester, chlorierte Paraffine, natürliche Öle tierischer oder pflanzlicher Herkunft, natürliche Fette mit Schmelzpunkten im Bereich 10 bis 35°C und aromatische und aliphatische Ether.

Bei dem der Wasserphase zuzusetsenden, zur Polyaddition benötigten Reaktionspartner handelt es sich vorzugsweise um aliphatische Amine, Diamine und Triamine.

Bei den zu verkapselnden Stoffen kann es sich z.B. um Leukofarbstoffe, Parfümöle, Paraffinöle, Pflanzenschutzmittel, Pharmazeutika oder Klebstoffe handeln. Vorzugsweise wird das erfindungsgemäße Verfahren bei der Verkapselung von Leukofarbstoffen und Pflanzenschutzmitteln angewendet. Hierfür ist bezuglich des Kapseldurchmessers häufig eine enge Volumenverteilungskurve erwünscht. Leukofarbstoffe in Form einer Dispersion von Mikrokapseln können z.B. zu Selbstdurchschreibepapieren, Pflanzenschutzmitteln in Form von Dispersionen von Mikrokapseln zu sogenannten "slow-release"-Formulierungen weiter verarbeitet werden. Die Herstellung der Öl-in-Wasser-Emulsion, aus der die Dispersion von Mikrokapseln hervorgeht, kann chargenweise oder kontinuierlich erfolgen.

Erfindungsgemäß zu verkapselnde Stoffe, dabei zu verwendende lipophile, zur Polyaddition befähigte Substanzen, zur Polyaddition benötigte Reaktionspartner und gegebenenfalls einzusetzende Hilfsmittel, z.B. in die Ölphase einzusetzende Lösungsmittel und Stabilisatoren (Schutzkolloide) sind als solche und zur Herstellung von Mikrokapseldispersionen bekannt.

Das erfindungsgemäße Verfahren weist eine Reihe von Vorteilen auf. Das ist besonders überraschend, denn erfindungsgemäß wird konträr zum Stand der Technik ein Emulgator der Ölphase zugefügt. So ist beim erfindungsgemäßen Verfahren der für den Emulgierschritt notwendige spezifische Energieeintrag reduziert. Eine vorgegebene mittlere Tröpfchengröße kann erfindungsgemäß mit weniger Energie erzielt werden bzw. werden bei gleichem Energieeintrag kleinere Öltröpfchen erhalten. Häufig erhält man auch eine engere Volumenverteilungskurve für die emulgierten Öltröpfchen, was eine Verbesserung des Emulgierschrittes darstellt. Wünschenswert ist eine solche engere Volumenverteilungskurve der emulgierten Öltröpfchen, weil die aus der Emulsion resultierende Mikrokapseldispersion praktisch die gleiche Volumenverteilung bei den dispergierten Mikrokapseln aufweist. Mikrokapseln, vor allem, wenn sie zur Herstellung von Durchschreibepapieren weiter verarbeitet werden, haben bessere anwendungstechnische Eigenschaften, wenn eine bestimmte Breite der Verteilungskurve nicht überschritten wird.

Bei der Herstellung der Öl-in-Wasser-Emulsion ist - abhängig von der Grenzflächenspannung zwischen Öl- und Wasserphase - eine bestimmte Zeit erforderlich, um Öltröpfchen einer bestimmten Größe zu erzielen. Üblicherweise liegt die mittlere Tröpfchengröße im Bereich zwischen 3 und 15 Mikron, z.B. wenn die resultierenden Mikrokapseldispersionen zu Selbstdurchschreibepapier verarbeitet werden sollen. Bei schwer emulgierbaren Systemen, d.h. bei solchen mit hoher Grenzflächenspannung, ist nach dem Stand der Technik entweder eine längere Zeitspanne oder aber der Zusatz von Emulgatoren zur Wasserphase erforderlich, um zur gewünschten Tröpfchengröße zu gelangen. Wird die Emulgierzeit verlängert, so führt das dazu, daß - statistisch gesehen - ein Anteil der Teilchen die Emulgierzone mehrfach passiert, was zu einer breiteren Volumenverteilungskurve für die Öltröpfchen in der Emulsion führt. Bei kontinuierlich betriebenen Emulgiermaschinen bedeutet das, daß der Durchsatz begrenzt und/oder die aufzuwendende Energie pro Volumeneinheit zu erzeugender Emulsion erhöht werden muß.

Werden erfindungsgemäß der Ölphase öllösliche Emulgatoren zugesetzt, so resultiert daraus auch der Vorteil einer kürzeren Emulsionszeit, bei häufig geringerem Energieeintrag pro Volumeneinheit zu erzeugender Emulsion. Gestaltet man den Emulgierprozeß kontinuierlich, so kann der Durchsatz pro Zeiteinheit bei konstantem Energieeintrag erhöht werden, ohne daß dies zu Lasten der angestrebten engen Volumenverteilung der Öltröpfchen geht.

Zusammenfassend läßt sich feststellen, daß die erfindungsgemäße Arbeitsweise gegenüber der Arbeitsweise ohne Emulgatoren oder mit Emulgatorenzusatz in die Wasserphase vorteilhaft ist, vor allem hinsichtlich Energieeinsparung, Emulgierdauer und Breite der Verteilungskurve der Öltropfen. Sehr überraschend ist, daß diese Effekte auch dann auftreten, wenn man einen wasser- und öllöslichen Emulgator statt in der Wasserphase in der Ölphase anwendet (siehe etwa die folgenden Beispiele 1 und 2).

Soweit nichts anderes angegeben ist, handelt es sich bei allen Prozentangaben um Gewichtsprozente.

### Beispiele

### Beispiel 1 (zum Vergleich)

Aus 30 g Kristallviolettlacton, 582 g Diisopropylnaphthalin-Isomerengemisch und 388 g einer hydrierten naphthenischen Erdölfraktion (Nytex® 800) wurde durch Rühren, Erwärmen auf 120°C und wieder Abkühlen auf Raumtemperatur eine Lösung hergestellt. 360 g davon wurden mit 40 g des Oxadiazintrions des Hexamethylendiisocyanats (hergestellt gemäß DE-OS 1 670 664; NCO-Gehalt 21 Gew.-%) homogen vermischt und so eine Ölphase erhalten.

50 g Polyvinylalkohol (Typ AIRVOL® 523) wurden in 1000 g deionisiertem Wasser unter Rühren und Erwärmen in Lösung gebracht, anschließend mit weiteren 3950 g deionisiertem Wasser versetzt, auf Raumtemperatur abgekühlt und so eine Wasserphase erhalten. 600 g der Wasserphase wurden mit 0,2 g eines Emulgators versetzt, bei dem es sich um das Umsetzungsprodukt eines Fettalkoholgemisches C₁₀-C₁₆ mit 4,4 Mol Ethylenoxid handelte.

In die Wasserphase wurde unter schnellem Rühren mit einem Labor-Ankerrührer die Ölphase gegeben und die so erhaltene Voremulsion in einem hochtourig laufenden (8000 U/min) Emulgiergerät (Typ Megatron) im Verlaufe von 3,5 Minuten in eine feinteilige Öl-in-Wasser-Emulsion überführt.

Die Öl-in-Wasser-Emulsion wurde bei Raumtemperatur unter langsamem Rühren mit einem Labor-Ankerrührer mit einer Lösung von 4,0 g Diethylentriamin in 41 g deionisiertem Wasser versetzt. Spontan bildete sich aus der Öl-in-Wasser-Emulsion eine Dispersion von Mikrokapseln mit Polyharnstoff-Wänden.

Die Bestimmung des mittleren Teilchendurchmessers und der Breite der Volumenverteilungskurve der Mlkrokapseln mit einem Teilchengrößen-Meßgerät (Typ Multisizer II) ergab folgende Werte:
- mittlerer Teilchendurchmesser:: 9,9 µ
- Breite der Volumenverteilungskurve:: 63,5 % Volumenanteil zwischen 5 und 20 µ.

### Beispiel 2

Beispiel 1 wurde wiederholt, jedoch wurden die 0,2 g Emulgator nicht der Wasserphase, sondern der Ölphase vor der Zugabe des Isocyanates zugesetzt.

Es wurde eine Mikrokapsel-Dispersion erhalten, deren Kapseln einen mittleren Teilchendurchmesser von 8,1 µ aufwiesen und deren Breite der Volumenverteilungskurve 78,0 % (Volumenanteil zwischen 5 und 20 µ) betrug.

### Beispiel 3 (zum Vergleich)

Beispiel 1 wurde wiederholt, jedoch wurden 0,4 g eines Umsetzungsprodukts von 1 Mol Stearylalkohol mit 7 Mol Ethylenoxid als Emulgator eingesetzt und das Emulgiergerät mit 9700 U/min betrieben.

Es wurde eine Mikrokapsel-Dispersion erhalten, deren Kapseln einen mittleren Teilchendurchmesser von 10,5 µ aufwiesen und deren Breite der Volumenverteilungskurve 75 % zwischen 5 und 20 µ betrug.

### Beispiel 4

Beispiel 3 wurde wiederholt, jedoch wurden die 0,4 g des Emulgators der Ölphase vor der Zugabe des Isocyanates zugesetzt.

Es wurde ein Mikrokapsel-Dispersion erhalten, deren Kapseln einen mittleren Teilchendurchmesser von 7,5 µ aufwiesen und deren Breite der Volumenverteilungskurve 75 % zwischen 5 und 20 µ betrug.

### Beispiel 5

Eine 4 %ige Lösung von Kristallviolettlacton in einem Gemisch aus 70 % eines Diisobutyldiphenyl-Isomerengemisches und 30 % einer hydrierten naphthenischen Erdölfraktion wurde unter Rühren und Erwärmen hergestellt. Nach Abkühlung wurden 40 g eines Isocyanats zugesetzt, bei dem es sich um das Isocyanurat aus Hexamethylendiisocyanat mit 21% freien NCO-Gruppen handelte, und so eine Ölphase erhalten. Jeweils 400 g dieser Ölphase wurden bei 25°C in 600 g einer 1 %igen wäßrigen Polyvinylalkohollösung emulgiert wie näher in Beispiel 1 beschrieben, wobei jeweils 0,2 g der unten angegebenen Emulgatoren A bis D einmal der Ölphase (erfindungsgemäß) und einmal der Wasserphase (zum Vergleich) zugefügt wurde. Bei den so erhaltenen Emulsionen wurde die mittlere Teilchengröße der Öltröpfchen und der Vol.-%-Anteil der Teilchen einer Größe von über 12 µ bestimmt. Einzelheiten sind aus der Tabelle 1 ersichtlich.
- Emulgator A:: Umsetzungsprodukt aus 1 Mol Sojafettalkohol und 7 Mol Ethylenoxid.
- Emulgator B:: Umsetzungsprodukt aus 1 Mol Rizinusfettalkohol und 10 Mol Ethylenoxid.
- Emulgator C:: Umsetzungsprodukt von 1 Mol Rizinusfettalkohol mit 3,5 Mol Ethylenoxid.

**Tabelle 1**

| Emulgator | Zusatz zur Ölphase | | Zusatz zur Wasserphase | |
|---|---|---|---|---|
| | mittl. Teilchengröße (µ) | %-Anteil über 12 µ | mittl. Teilchengröße (µ) | %-Anteil über 12 µ |
| Keiner | 8,7 | 20,0 | 8,7 | 20,0 |
| A | 6,4 | 2,1 | 7,5 | 10,4 |
| B | 7,8 | 10,9 | 8,4 | 16,5 |
| C | 6,2 | 0,8 | 6,8 | 5,6 |

### Beispiel 6

Durch Erwärmen und Rühren wurden aus 5700 g eines chlorierten aliphatischen Paraffins mit 35% Chlorgehalt, 3800 g Nytex® 800 (siehe Beispiel 1), 500 g Kristallviolettlacton und 1200 g des auch in Beispiel 1 verwendeten Diisocyanats eine Ölphase hergestellt. Jeweils 400 g dieser Ölphase wurden bei 25°C in einer Mischsirene (Typ MS 1FCAB, Fa. Fluid Kotthoff) in jeweils 600 g einer 1%igen Polyvinylalkohollösung emulgiert. Jeweils 0,3 g der Emulgatoren D (= niedrig ethoxylierter Fettalkohol der Fa. Henkel KGaA) und E (= mit 4 Mol Ethylenoxid ethoxyliertes Kokosfettamin) wurden einmal der Ölphase (erfindungsgemäß) und einmal der Wasserphase (zum Vergleich) zugefügt. An der jeweils erhaltenen Emulsion wurden die gleichen Messungen vorgenommen wie in Beispiel 5. Einzelheiten sind aus der Tabelle 2 ersichtlich.

**Tabelle 2**

| Emulgator | Zusatz zur Ölphase | | Zusatz zur Wasserphase | |
|---|---|---|---|---|
| | mittl. Teilchengröße (µ) | %-Anteil über 12 µ | mittl. Teilchengröße (µ) | %-Anteil über 12 µ |
| Keiner | 14,4 | 63,0 | 14,4 | 63,0 |
| D | 8,1 | 24,6 | 8,7 | 28,1 |
| E | 7,1 | 22,3 | 7,3 | 25,8 |

### Beispiel 7

Aus 2 % eines schwarz entwickelnden Fluoranfarbstoffvorläufers, 2 % eines schwarzentwickelnden Benzoxazinfarbstoffvorläufers, 10 % eines Biuretstruktur aufweisenden Trimerisats des Hexamethylendiisocyanats mit 22% freien NCO-Gruppen und 86 % Diisopropylnaphthalin wurde eine Ölphase hergestellt. Die Wasserphase bildete eine 1 %ige wäßrige Polyvinylalkohollösung. Diese beiden Phasen wurden im Gewichtsverhältnis 40:60 einem kontinuierlich arbeitenden Emulgiergerät (Drehzahl 2700 U/min) zugeführt.
a) Ohne Emulgatorzusatz wurden pro Stunde 1000 kg einer Emulsion mit einer mittleren Teilchengröße der Öltröpfchen von 6,5 µ erhalten. Bei der Anhebung des stündlichen Durchsatzes auf 1300 kg erhöhte sich die mittlere Teilchengröße der Öltröpfchen auf 7,5 µ.
b) Mit Zusatz von 0,05 Gew.-% eines C₁₆-C₁₈-Fettalkoholpolyglykolethers, der mit 7 Mol Ethylenoxid ethoxyliert war (in Form einer 10%igen Lösung in Diisopropylnaphthalin) als Emulgator in die Ölphase wurden pro Stunde 1000 kg einer Emulsion mit einer mittleren Teilchengröße der Öltröpfchen von 5,7 µ erhalten.
c) Beim Arbeiten entsprechend b), jedoch mit erhöhtem stündlichem Durchsatz, ergab sich, daß bis zu einem Durchsatz von 1450 kg/Stunde keine wesentliche Änderung der gebildeten Emulsion eintrat. Die mittlere Teilchengröße der Öltröpfchen betrug 5,6 µ.

Das vorstehende Beispiel zeigt, daß man beim Arbeiten in großtechnischem Maßstab durch erfindungsgemäßen Emulgatorzusatz in die Ölphase eine Verminderung der Tröpfchengröße bei gleichzeitig stark erhöhtem Durchsatz bei gleicher Energieaufwendung für die Emulgierung erreicht.

### Beispiel 8

Die gemäß den Beispielen 5, 6 und 7 hergestellten Öl-in-Wasser-Emulsionen wurden jeweils durch Zusatz der stöchiometrisch erforderlichen Menge Ethylendiamin in eine Mikrokapsel-Dispersion überführt, in der die Abmessungen und Größenverteilung der Kapseln ungefähr denjenigen der Öltröpfchen in der Emulsion entsprach.

## Patentansprüche

1. Verfahren zur Herstellung von Mikrokapsel-Dispersionen nach einem Grenzflächen-Polyadditionsverfahren, indem man aus einer Ölphase, die den zu verkapselnden Stoff und eine lipophile, zur Polyaddition befähigte Substanz enthält, und einer wäßrigen Phase, eine Öl-in-Wasser-Emulsion herstellt und danach der Wasserphase den zur Polyaddition benötigten Reaktionspartner zusetzt, dadurch gekennzeichnet, daß man der Ölphase vor der Emulgierung einen öllöslichen Emulgator zufügt.

2. Verfahren nach Anspruch 1, dadurch gekennzeichnet, daß man als öllösliche Emulgatoren Fettsäureester, Fettamide, Polyglykolether oder Polypropylenglykolether verwendet, deren Löslichkeit in der Ölphase mindestens 0,01 Gew.-% beträgt.

3. Verfahren nach Ansprüchen 1 und 2, dadurch gekennzeichnet, daß man als öllösliche Emulgatoren Fettalkoholpolyglykolether der Formel 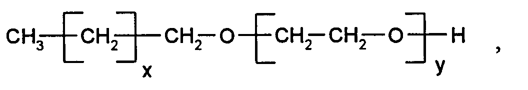 in der
x für ein ganze Zahl von 10 bis 16 und
y für eine ganze Zahl von 4 bis 12 steht,
verwendet.

4. Verfahren nach Ansprüchen 1 bis 3, dadurch gekennzeichnet, daß man öllösliche Emulgatoren in einer Konzentration von 0,02 bis 1 Gew.-%, bezogen auf die Ölphase, anwendet.

5. Verfahren nach Ansprüchen 1 bis 4, dadurch gekennzeichnet, daß es sich bei den zu verkapselnden Stoffen um Leukofarbstoffe, Parfümöle, Paraffinöle, Pflanzenschutzmittel, Pharmazeutika oder Klebstoffe handelt.

## Claims

1. Process for the preparation of microcapsule dispersions by an interface polyaddition process in which an oil-in-water emulsion is prepared from an oily phase, which comprises the substance to be encapsulated and a lipophilic substance capable of polyaddition, and an aqueous phase, and the reaction partner required for the polyaddition is then added to the aqueous phase, characterized in that an oil-soluble emulsifier is added to the oily phase before the emulsification.

2. Process according to Claim 1, characterized in that fatty acid esters, fatty acid amides, polyglycol ethers or polypropylene glycol ethers, the solubility of which in the oily phase is at least 0.01% by weight, are used as oil-soluble emulsifiers.

3. Process according to Claims 1 and 2, characterized in that fatty alcohol polyglycol ethers of the formula 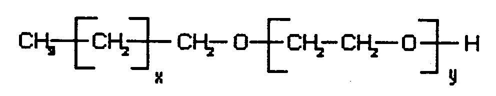 in which
x represents an integer from 10 to 16 and
y represents an integer from 4 to 12,
are used as oil-soluble emulsifiers.

4. Process according to Claims 1 to 3, characterized in that the oil-soluble emulsifiers are used in a concentration of 0.02 to 1% by weight, based on the oily phase.

5. Process according to Claims 1 to 4, characterized in that the substances to be encapsulated are leuco dyestuffs, perfume oils, paraffin oils, plant protection agents, pharmaceuticals or adhesives.

## Revendications

1. Procédé pour la préparation de dispersions de microcapsules conformément à un procédé de polyaddition à l'interface, dans lequel, à partir d'une phase huileuse qui contient la substance à encapsuler et une substance lipophile apte à la polyaddition, et d'une phase aqueuse, on prépare une émulsion huile-dans-l'eau, puis on ajoute à la phase aqueuse le partenaire réactionnel requis pour la polyaddition, caractérisé en ce qu'on ajoute à la phase huileuse, avant l'émulsification, un émulsifiant soluble dans l'huile.

2. Procédé selon la revendication 1, caractérisé en ce qu'on utilise comme émulsifiants solubles dans l'huile, des esters d'acides gras, des amides gras, des éthers de polyglycol ou des éthers de polypropylèneglycol dont la solubilité dans la phase huileuse s'élève à au moins 0,01% en poids.

3. Procédé selon les revendications 1 et 2, caractérisé en ce qu'on utilise comme émulsifiants solubles dans l'huile, des éthers de polyglycol d'alcools gras répondant à la formule: 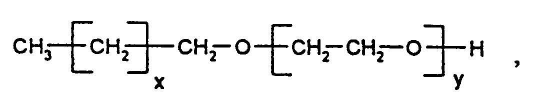 dans laquelle
x représente un entier de 10 à 16 et
y représente un entier de 4 à 12.

4. Procédé selon les revendications 1 à 3, caractérisé en ce qu'on applique des émulsifiants solubles dans l'huile en une concentration de 0,02 à 1% en poids rapporté à la phase huileuse.

5. Procédé selon les revendications 1 à 4, caractérisé en ce que, quant aux substances à encapsuler, il s'agit de colorants leuco, d'essences de parfums, d'huiles paraffiniques, d'agents de protection contre les plantes, de produits pharmaceutiques ou d'adhésifs.
